(19) Europäisches Patentamt
European Patent Office
Office européen des brevets

(11) EP 0 851 016 B1

(12) # FASCICULE DE BREVET EUROPEEN

(45) Date de publication et mention de la délivrance du brevet:
**02.06.2004 Bulletin 2004/23**

(51) Int Cl.[7]: **C09K 3/18**, C03C 17/30

(21) Numéro de dépôt: **97403117.1**

(22) Date de dépôt: **22.12.1997**

(54) **Composition hydrofuge**

Wasserabstossende Zusammensetzung

Water repellent composition

(84) Etats contractants désignés:
**DE FR GB**

(30) Priorité: **27.12.1996 FR 9616097**

(43) Date de publication de la demande:
**01.07.1998 Bulletin 1998/27**

(73) Titulaires:
- **AIRBUS France**
  **31060 Toulouse Cedex 03 (FR)**
- **E.I. DU PONT DE NEMOURS AND COMPANY**
  **Wilmington, Delaware 19898 (US)**

(72) Inventeurs:
- **Michaud, Pascal**
  **95210 Saint-Gratien (FR)**
- **Costes, Bruno**
  **95170 Deuil La Barre (FR)**
- **Henry, Yves**
  **78150 Le Chesnay (FR)**
- **Lascours, Pierre**
  **31270 Cugnaux (FR)**

(74) Mandataire: **Poulin, Gérard et al**
**BREVALEX**
**3, rue du Docteur Lancereaux**
**75008 Paris (FR)**

(56) Documents cités:
**EP-A- 0 545 201**
**WO-A-96/11979**
**WO-A-96/30487**
**US-A- 3 442 664**
**US-A- 5 221 329**

- **DATABASE WPI Section Ch, Week 8932 Derwent Publications Ltd., London, GB; Class A26, AN 89-231716 XP002040258 & JP 01 167 393 A (MITSUBISHI HEAVY IND CO LTD) , 3 juillet 1989**
- **DATABASE WPI Section Ch, Week 9439 Derwent Publications Ltd., London, GB; Class A14, AN 94-313955 XP002040259 & JP 06 240 237 A (LION CORP) , 30 août 1994**
- **DATABASE WPI Section Ch, Week 8629 Derwent Publications Ltd., London, GB; Class A26, AN 86-186111 XP002040260 & JP 61 118 487 A (NITTO KAGAKU KK) , 5 juin 1986**
- **DATABASE WPI Section Ch, Week 9628 Derwent Publications Ltd., London, GB; Class E16, AN 96-271301 XP002040261 & JP 08 067 644 A (TECHNOLOGY AG KK) , 12 mars 1996**
- **DATABASE WPI Section Ch, Week 9618 Derwent Publications Ltd., London, GB; Class A25, AN 96-173877 XP002040262 & JP 08 024 504 A (MITSUI FLUOROCHEMICAL CO LTD) , 30 janvier 1996**
- **DATABASE WPI Section Ch, Week 9650 Derwent Publications Ltd., London, GB; Class D25, AN 96-503018 XP002059187 & JP 08 259 995 A (AGENCY OF IND SCI & TECHNOLOGY) , 8 octobre 1996**
- **DATABASE WPI Section Ch, Week 9349 Derwent Publications Ltd., London, GB; Class E19, AN 93-391817 XP002059188 & JP 05 293 303 A (ASAHI CHEM IND CO LTD) , 9 novembre 1993**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 851 016 B1

## Description

DOMAINE DE L'INVENTION

L'invention est relative à une composition hydrofuge, dite encore composition anti-mouillante, dite aussi en anglais composition "Rain-Repellent" qui permet d'éviter le dépôt de liquide en particulier de l'eau ou d'un liquide aqueux sur une surface, elle concerne en particulier une composition pour éviter le dépôt de l'eau ou chasser l'eau de pluie ou toute autre projection d'eau sur une surface de préférence transparente, en particulier une surface en verre, par exemple la surface d'une vitre et notamment la surface d'un pare-brise de véhicule ou d'un aéronef, de préférence la surface du pare-brise du cockpit d'un avion.

ART ANTERIEUR ET PROBLEME POSE

Plusieurs solutions ont été proposées pour enlever ou repousser les liquides et notamment la pluie ou d'autres projections des vitres et autres surfaces transparentes telles que les pare-brise de véhicules, bateaux, avions et autres aéronefs, afin notamment de maintenir une vision nette au travers de ces pare-brise, indispensable pour assurer le confort et la sécurité des voyageurs. Le problème de la visibilité par temps de forte pluie est en effet l'un des problèmes les plus anciens rencontrés notamment dans le transport aérien, ce problème se posant encore avec plus d'acuité avec les "jets".

Les solutions envisagées peuvent être rangées en deux grandes catégories :

- les moyens mécaniques,
- les moyens chimiques.

Dans la première catégorie, les essuie-glaces cnt été et sont mis en oeuvre avec succès sur les pare-brise - mais aussi sur d'autres surfaces vitrées : vitres de phares, de caméras, etc. - des automobiles, bateaux, locomotives et autres véhicules ainsi que des avions et d'autres aéronefs (hélicoptères, etc.).

Les avions, en particulier, mettent en oeuvre des essuie-glaces analogues aux essuie-glaces d'automobiles mais fonctionnant à plus grande vitesse et dont les balais sont appliqués avec une pression plus forte sur le pare-brise.

Cependant pour être efficaces, les essuie-glaces nécessitent des vitesses de battement élevées et par voie de conséquence une consommation électrique importante pour mettre en oeuvre les dispositifs associés.

Il a été également proposé, pour chasser l'eau du pare-brise d'utiliser un jet d'air comprimé. Ce système est lourd s'il est autonome ou bien pénalisant pour les performances de l'avion s'il prélève l'air comprimé nécéssaire sur les moteurs.

La seconde catégorie de solutions envisagées est celle des moyens chimiques, ces moyens pouvant être utilisés seuls ou en complément des moyens mécaniques décrits ci-dessus. Ces moyens consistent de manière générale, à rendre la surface hydrophobe, c'est-à-dire non mouillable par l'eau, la surface traitée devenant ainsi répulsive pour l'eau. Autrement dit, sur la surface traitée, par exemple la surface extérieure du pare-brise rendue non mouillable du fait du revêtement hydrophobe qu'elle porte, l'eau se trouve brisée en minuscules gouttelettes qui sont entraînées par le courant d'air à grande vitesse qui balaye le pare-brise. Une excellente visibilité peut être ainsi obtenue, supérieure à celle des procédés mécaniques mis en oeuvre seuls.

Il existe de nombreux documents ayant trait à l'application d'enduits sur des surfaces en particulier transparentes, afin de les rendre hydrofuges, non mouillables.

Les documents US-A-2 612 458 et US-A-2 777 772 décrivent des produits hydrofuges se composant de polysilanes de substitution appliqués par frottement avec un agent de friction sur un pare-brise propre et sec.

Le document US-A-2 923 633 est relatif à des produits hydrofuges ou anti-pluie pour pare-brise, en particulier pour les pare-brise de véhicules se déplaçant à grande vitesse qui contiennent des polysilanes comportant des groupes alcoxy. Ces produits sont mélangés avec du carbon black ou rouge jouant le rôle d'agent de friction pour former une pâte qui est appliquée par frottement sur le pare-brise propre et sec. L'application d'une couche de cire supplémentaire n'est pas nécessaire.

Le document US-A-2 962 390 concerne une composition hydrofuge dans laquelle on effectue tout d'abord l'application sur une surface à traiter d'une pâte d'alkyl alcoxysilane avec par exemple du carbon black qui est hydrolysée, puis recouverte d'une couche de cire de paraffine hydrofuge et d'une résine polyamide. La surface traitée doit être propre et sèche.

Ces compositions présentent l'inconvénient notable pour pouvoir être efficaces de devoir être appliquées sur une surface sèche et ne peuvent donc être utilisées en vol et sous la pluie. Elles requièrent des opérations d'application souvent longues et compliquées et de ce fait une immobilisation au sol de l'avion. Il a également été proposé d'exposer les surfaces à traiter, tels que des pare-brise d'avions à des vapeurs de méthylchlorosilane (s) afin de les rendre

hydrofuges, mais cette opération est longue et complexe et entraîne également l'immobilisation prolongée de l'appareil au sol.

De nombreuses compositions hydrofuges requièrent également une étape de durcissement notamment thermique pour pouvoir être opérationnelles, de ce fait leur mise en oeuvre, malgré l'excellente protection obtenue est extrêmement contraignante.

D'autres compositions hydrofuges contiennent de ce fait des alkylpolysiloxanes et des acides forts dans un solvant et sont décrites en particulier dans le document US-A-3 579 540 ; ces compositions forment un film hautement résistant sur une longue durée, mais présentent l'inconvénient essentiel d'être corrosives en particulier pour les pièces métalliques.

Le document US-A-5 021 089 décrit des compositions hydrofuges sans acide fort et non corrosives qui contiennent un silyl phosphate, un organopolysiloxane (diméthyl polysiloxane) et un solvant organique volatil qui peut être un organopolysiloxane (oligomère). Ces compositions sont appliquées sur des surfaces de verre sèches et propres pour former un film uniforme et ne peuvent être appliquées sous la pluie.

De même, le document FR-A-2 662 171 a trait à une composition hydrofuge non corrosive pour matériaux non poreux comprenant un alkylpolysiloxane, par exemple un diméthylpolysiloxane et du silicate de sodium. Pour l'application, il faut d'abord nettoyer et sécher la surface à traiter, laisser sécher le revêtement et polir.

Toutes les compositions mentionnées ci-dessus sont des compositions qui adhèrent fortement à la surface et sont du type enduit préappliqué exerçant une action rémanente, elles ne peuvent donc être appliquées qu'au sol, la plupart du temps manuellement, en suivant un mode opératoire contraignant, entraînant une immobilisation prolongée et coûteuse de l'aéronef. De plus, l'application doit se faire sur un verre propre et sec non exposé à la pluie, le verre doit donc être protégé des intempéries lors de la mise en oeuvre de ces compositions. Le revêtement appliqué n'a qu'une durée de vie limitée et disparaît suite à l'érosion de la pluie, de la grêle, de la neige, des cristaux de glace, des poussières et du sable. Cela peut se produire en plein vol sans qu'il soit possible d'y remédier - en particulier lors de la phase critique de l'atterrissage.

On a donc cherché à mettre au point des compositions qui peuvent être appliquées sous la pluie, lorsque les intempéries se produisent, à la demande, à l'aide d'un dispositif aisément actionnable, par exemple par l'équipage de l'avion, ce dispositif pouvant par exemple se présenter sous la forme de buses de pulvérisation placées au voisinage du pare-brise.

Aussi le document FR-A-1 390 936 (US-A-3 310 429) est-il relatif à une composition hydrofuge qui peut être appliquée par temps de pluie et en vol et qui comprend un agent actif de type composé d'ammonium quaternaire ou complexe chrome-acide myristique, dans un solvant notamment de type CFC (F113 ou F112) - et qui peut être projetée à partir d'un récipient stocké dans l'avion.

De même, le document US-A-3 352 709 décrit une composition applicable en vol et sous la pluie comprenant la combinaison de type composés d'ammonium quaternaire dont l'un - analogue aux composés du document US-A-3 310 429 - porte essentiellement des radicaux aliphatiques, et l'autre porte essentiellement des radicaux polyoxyéthylène. Les agents actifs se trouvent en solution dans un solvant, par exemple de type CFC, notamment le F113, le F11 ou le F21.

Le document US-A-3 442 664 est relatif à une composition hydrofuge, en particulier pour pare-brise d'avions comprenant un mélange de deux fluorosilicones en tant qu'agent actif hydrophobe, avec éventuellement un tensioactif de type ammonium quaternaire dans un solvant halogèné tel que le 1,1,1 trichloroéthane. Une telle composition peut être appliquée en vol et par temps de pluie.

Le document FR-A-1 416 467 concerne une composition hydrofuge qui peut être appliquée par temps de pluie et en vol et qui comprend en tant qu'agent hydrofuge un copolymère silicotitane qui peut être dissous dans un solvant approprié de type par exemple CFC pour être appliqué par pulvérisation.

Le document US-A-3 343 750 correspondant à ce brevet français FR-A-1 416 467 mentionne en outre la présence d'agents tensio-actifs cationiques de type composé d'ammonium quaternaire et cite comme solvant le CFC 113.

Le document US-A-3 366 123 décrit de la même manière, une composition hydrofuge pulvérisable comprenant en tant qu'agent actif un composé de type copolymère silicotitane, silicosilicium, ou silicozirconium, un agent d'étalement (« spreading agent ») cationique qui est en particulier un sel d'ammonium quaternaire, et un solvant de type hydrocarbure, alcool ou CFC (notamment Fréon@ F113=1,1,2 - 1,2,2 trichloro-trifluoroéthane).

Enfin, le document US-A-5 221 329 décrit une composition hydrofuge en particulier pour pare-brise d'avions sensiblement analogue à celle du document US-A-3 343 750 c'est-à-dire comprenant essentiellement un copolymère de type silicotitanate, en tant qu'agent actif hydrophobe, un composé d'ammonium quaternaire comme tensio-actif cationique, et un solvant choisi par exemple parmi l'hexane, le toluéne, et les hydrocarbures halogénés tels que le CFC 113. Cette composition se différenciant essentiellement par le fait qu'elle comprend en outre un agent d'étalement (« spreading agent ») tel que le d-limonéne ou le salicylate de méthyle formant également le rôle d'agent odorant en vue de la détection en cas de fuite éventuelle.

Ces compositions largement utilisées permettent de remédier à la plupart des inconvénients mentionnés ci-dessus liés aux enduits "préappliqués".

On a vu que ces produits hydrofuges peuvent se présenter sous la forme de solutions stockées dans des récipients sous pression analogues aux bombes aérosols couramment utilisées dans d'autres domaines, ces récipients sont des récipients jetables qui sont remplacés par les équipes de maintenance au sol. Le récipient mis sous pression par un gaz adéquat, inerte tel que l'azote est relié par une vanne à une ou à plusieurs buses de pulvérisation ou "gicleurs" placées au voisinage du pare-brise et apte à projeter la solution de produit hydrofuge sur le pare-brise lorsque cela est nécessaire.

En cas de pluie, l'équipage peut alors, à volonté, déclencher l'ouverture de la vanne et projeter le produit sur le pare-brise (voir par exemple US-A-3 231 196).

Les produits actifs appliqués de la sorte doivent satisfaire à un grand nombre d'exigences, énumérées par exemple dans les documents US-A-3 433 750 et US-A-3 766 123, notamment :

- ils doivent présenter un indice de réfraction favorable, et une densité acceptable,
- ils doivent être non agressifs pour les matériaux des surfaces sur lesquelles ils sont appliqués en particulier pour les matériaux organiques et métalliques employés dans l'aéronautique,
- ils doivent être non inflammables et non toxiques ;
- et bien sûr, ils doivent être applicables par temps de pluie.

Les produits de l'art antérieur actuellement le plus couramment utilisés, s'ils sont satisfaisants pour ce qui concerne la plupart des exigences précédentes, présentent cependant l'inconvénient de polymériser au contact de l'air, ce qui entraîne des défauts de fonctionnement des systèmes d'alimentation et de projection dus en particulier à l'obturation des vannes et des gicleurs. Ces défauts de fonctionnement peuvent se produire à des moments particulièrement critiques : atterrissage, décollage... où le besoin d'une excellente visibilité se fait particulièrement sentir.

De plus, ces produits laissent des dépôts lors du séchage sur les surfaces telles que les vitres qui sont difficiles à éliminer. Ces dépôts sont relativement peu gênants pour la visibilité, mais esthétiquement préjudiciables pour l'aspect extérieur de l'avion. Ces inconvénients sont accrus par la pulvérisation et le dépôt successifs de plusieurs couches de produits conduisant alors à un manque croissant de visibilité. En outre, ces compositions pulvérisables contiennent en tant que solvant ou fluide porteur des composés de type CFC ou chlorofluorocarbures appartenant à la famille des Fréons®, notamment le Fréon® F113 (1,1,2-trichloro-1,2,2-tri-fluoroéthane), qui sont rendus responsables de la destruction de la couche d'ozone stratosphérique et dont l'utilisation est soumise à des réglementations de plus en plus sévères qui ont abouti selon le Protocole de Montréal à leur interdiction totale à partir du 1er Janvier 1996.

On a envisagé de remplacer les composés de type CFC par des composés de type HCFC tels que le F141b mais des réglementations de plus en plus strictes visant à interdire à plus ou moins long terme l'utilisation de tels composés ont été ou vont être promulguées dans de nombreux pays.

Il est donc impératif de mettre en oeuvre d'autres solvants ou fluides porteurs qui ne présentent pas une telle influence négative sur la couche d'ozone. Toutefois, la recherche de tels composés lorsqu'ils doivent être mis en oeuvre comme solvants spécifiques de produits hydrofuges se heurte à un grand nombre de difficultés car ces composés solvants doivent satisfaire à un grand nombre de critères difficiles à accorder du point de vue notamment de leur toxicité (facteur important notamment en cas de fuite), inflamabilité, stabilité, densité, tension de vapeur et de leur compatibilité avec les produits actifs hydrofuges ainsi qu'avec le gaz propulseur et éventuellement avec les autres composés susceptibles de faire partie de la composition.

L'invention a donc pour objet une composition hydrofuge aussi nommée "Rain Repellent" qui ne polymérise pas au contact de l'air, ne provoque pas de dépôt et donc, de bouchage des canalisations, vannes, gicleurs ou autres parties du circuit de distribution, ne laisse pas de traces et de dépôts durcis sur les surfaces traitées, a une excellente efficacité hydrofuge par forte pluie et qui remplisse également toutes les conditions mentionnées ci-dessus pour de telles compositions et en particulier une stabilité et une solubilisation complète du composé actif dans une large plage de température allant par exemple de -55°C jusqu' 80°C.

L'invention a également pour objet de fournir une composition hydrofuge pouvant être projetée sous la forme d'un aérosol et comportant un fluide porteur ou solvant remplissant entre autres les conditions citées plus haut, en conformité avec les réglementations bannissant les composés nocifs pour la couche d'ozone, compatible avec le produit actif c'est-à-dire en particulier solubilisant ce dernier sur toute la gamme de température, et le gaz propulseur, cette composition étant conditionnée dans un récipient mis sous pression avec un gaz inerte.

L'invention a enfin pour objet un récipient sous pression placé dans un véhicule, un aéronef, en particulier un avion qui est relié par l'intermédiaire d'une vanne à un gicleur voisin de la surface à traiter par exemple du pare-brise du véhicule ou de l'aéronef.

Ces objectifs et d'autres encore sont atteints selon l'invention par une composition hydrofuge anti-mouillante dite encore "Rain-Repellent" comprenant :

- un agent actif hydrophobe,
- un solvant ou fluide porteur compatible avec le principe ou l'agent actif hydrophobe,

caractérisée en ce que le solvant ou fluide porteur comprend au moins un hydrocarbure fluoré, liquide à la température ambiante, choisi parmi les (perfluoroalkyl)-éthylènes contenant 6 à 10 atomes de carbone, les 1H-hydrogénoperfluoroalcanes contenant 6 à 8 atomes de carbone, le 1,1,1,2,3,4,4,5,5,5-décafluoropentane, le n-perfluorohexane, le 1,1,1,3,3-pentafluorobutane de formule $CF_3$-$CH_2$-$CF_2$-$CH_3$, le 3,3,3,2,2-pentafluoro-1-propanol de formule $CF_3$-$CF_2$-$CH_2OH$, les éthers d'alkyle et de perfluoroalkyle de formule (I) :

$$R_F^1\text{-}O\text{-}R^1 \quad \text{(I)}$$

dans laquelle $R_F^1$ est un radical perfluoroalkyle comprenant de 2 à 6 atomes de carbone et $R^1$ est un radical alkyle comprenant de 1 à 4 atomes de carbone,les (N-perfluoroalkyl-perfluoromorpholine) éventuellement substitutées par un ou plusieurs radicaux perfluoroalkyle de formule (II)

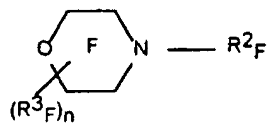
(II)

dans laquelle :

- $R_F^2$ et $R_F^3$, identiques ou différents, représentent un radical aliphatique perfluoré, linéaire ou ramifié, comprenant de 1 à 4 atomes de carbone ;
- n est un entier de 0 à 8 ;
- le symbole F, à l'intérieur du cycle, signifie que le cycle saturé est totalement fluoré, c'est-à-dire que tous les atomes de carbone sont liés à des atomes de fluor ou, éventuellement, à un ou deux radical(aux) $R_F^3$, et leurs mélanges ; et en ce que l'agent actif hydrophobe est un composé de type organopolysiloxane.

La composition selon l'invention, comportant un solvant comprenant au moins un hydrocarbure fluoré, liquide à la température ambiante choisi parmi les composés cités plus haut, satisfait les contraintes réglementaires, n'a pas d'effets indésirables pour l'environnement et présente une toxicité moindre et très réduite. Cela est, en effet, particulièrement important pour le produit qui doit être manipulé notamment par le personnel de maintenance et dans le cas où des fuites se produiraient dans le circuit de distribution ou dans le récipient de stockage se trouvant à proximité du poste de pilotage.

La composition selon l'invention évite également la formation de dépôts solides dans les tuyaux, gicleurs, etc. nuisibles pour le bon fonctionnement des systèmes, ainsi que la formation de couches dures, de traces de coulures etc. sur les surfaces traitées ou à leur voisinage.

Ensuite, et entre autres, la composition selon l'invention possède toutes les propriétés habituellement requises d'un liquide hydrofuge dit encore liquide « anti-mouillant » ou « Rain-Repellent » : avant tout indice de réfraction favorable, non agressivité vis-à-vis des matières entrant dans la fabrication des véhicules, aéronefs, etc. sur lesquels il est susceptible d'être employé, faible toxicité (de tous ses composants) pour le personnel, non inflammabilité, bonne stabilité au stockage notamment dans les réservoirs sous pression et ce dans une large gamme de température allant par exemple de -55°C jusqu'à 80°C.

En outre, la composition selon l'invention est également applicable en vol, sous la pluie, et a une très grande efficacité hydrofuge, anti-pluie, anti-mouillante dans toutes les conditions de vol à faible vitesse et à vitesse élevée, que l'on utilise ou non les essuie-glaces ou d'autres moyens mécaniques.

Enfin, contrairement aux compositions de l'art antérieur pour lesquelles les arrivées successives de produit accroissent le manque de visibilité, la composition selon l'invention présente l'avantage de permettre le dépôt de plusieurs couches successives du produit sans nuire à son efficacité et tout en permettant un nettoyage facile de la surface recevant ledit produit.

Le solvant de la composition selon l'invention comprend donc au moins un hydrocarbure fluoré liquide à la température ambiante choisi parmi les composés cités plus haut et compatible avec l'agent hydrophobe.

Parmi les (perfluoroalkyl)-éthylènes on préfère les composés de formule (III)

$$CF_3\text{-}(CF_2)_n\text{-}CH = CH_2 \qquad (III)$$

dans laquelle n est un nombre entier de 3 à 7.

De préférence encore n=3, ou de préférence encore n=5.

Le composé de formule (III) où n=3 c'est-à-dire le (perfluorobutyl)-éthylène est disponible auprès de la société ELF ATOCHEM sous le nom de « FORALKYL E4 ».

Le composé de formule (III) où n=5 c'est-à-dire le (perfluorohexyl)-éthylène est disponible auprès de la société ELF ATOCHEM sous le nom de « FORALKYL E6 ».

Comme exemple de 1H-hydrogénoperfluoroalcanes, on peut citer plus particulièrement le composé 1H-hydrogénoperfluorohexane ($C_6F_{13}H$).

Parmi les éthers d'alkyle et de perfluoroalkyle de formule (I) citée plus haut, on préfère le composé spécifique éther de n-perfluorobutyle et de méthyle de formule $nC_4F_9\text{-}O\text{-}CH_3$.

Parmi les composés de formule (II) citée plus haut, on préfère le composé spécifique N-perfluorométhyl-perfluoromorpholine de formule :

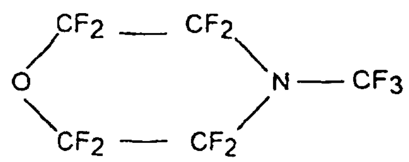

ou $C_5F_{11}N$

L'hydrocarbure fluoré choisi parmi les composés cités plus haut, et en particulier le composé de formule (III), peut être présent seul ou en mélange avec un ou plusieurs autres composé(s) choisi(s) par exemple parmi les alcanes inférieurs partiellement fluorés, les éthers de glycols, les huiles silicones de faible masse moléculaire et le méthoxypropanol.

De préférence, on utilisera les éthers monoalkyliques d'alkylèneglycols tel que l'éther monométhylique du dipropylène glycol disponible auprès de la société ARCO sous le nom de ARCOSOLV® DPM ou encore l'éther mono (n)butylique du dipropylène glycol encore appelé DPnB (dipropylène glycol mono(n)butyl éther).

Dans le cas où l'on utilise un mélange de solvant(s), l'hydrocarbure fluoré liquide à la température ambiante choisi parmi les composés cités plus haut, et en particulier le composé selon la formule (I) représentera de préférence de 10 à 90% en poids, de préférence encore de 25 à 75% mieux de 40 à 60% en poids par exemple 50% du mélange de solvants.

A titre d'exemple des mélanges de solvants selon l'invention on peut citer un mélange constitué de (perfluorohéxyl)éthylène ou de (perfluorobutyl)éthylène par exemple de 25 à 75% en masse et d'éther monométhylique du dipropylèneglycol, par exemple à de 75 à 25 % en masse.

La composition selon l'invention comprend de préférence de 80 % à 99 % en masse de préférence de 85 à 99 % et encore mieux de 90 à 98 % de solvant ; de 1 à 20 %, de préférence de 1 à 15 % encore mieux de 2 à 10 % d'agent actif hydrophobe.

La composition peut éventuellement également comprendre une essence de parfum afin de communiquer une odeur agréable à l'aérosol cette essence de parfum sera de préférence une essence à odeur orangée ou citronnée, par exemple du d-limonène, du vert Gallia ou de la Vanilline ; l'essence de parfum, lorsqu'elle est présente, représente de 0,001 à 1 % en masse, de préférence 0,01 à 0,1% de la composition ; elle a essentiellement pour but d'avertir l'équipage en cas de fuite de produit à l'intérieur de la cabine de pilotage.

D'autres composés et adjuvants peuvent être inclus dans la composition pour en améliorer l'une ou l'autre propriété, par exemple des stabilisants tels que les nitroalcanes comme le nitrométhane ou le nitroéthane et les acétals comme le méthylal ou le 1,3-dioxolane, ou des agents anticorrosion, dans des proportions de 0,1 à 5% (de préférence environ 0,5%) par rapport au poids de la composition

L'agent actif hydrophobe de type organopolysiloxane encore appelé fluide silicone mis en oeuvre dans la composition selon l'invention est choisi de préférence parmi les composés de formule générale (IV)

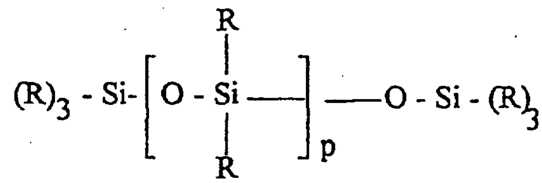

(IV)

où p est un nombre entier de 0 à 150 ; et les symboles R, identiques ou différents, représentent chacun un groupe alkyle ou alcoxy de 1 à 10 atomes de carbone, cycloalkyle de 3 à 10 atomes de carbone, un groupe phényle, un groupe réactif, un halogène (F, Cl, Br, I) ou un hydrogène.

De préférence, l'agent actif hydrophobe de type organopolysiloxane est choisi parmi les composés de type fluide ou huile silicone comprenant une fonction amino réactive, c'est-à-dire que dans la formule (IV) au moins un des groupes R est un groupe aminé c'est-à-dire par exemple un groupe tel que l'un de ceux déjà définis plus haut et portant un groupe amino.

De tels composés sont disponibles par exemple auprès de la société General Electric sous la dénomination SF 1706.

Ces composés se sont avérés particulièrement adéquats en particulier lorsqu'ils sont mis en oeuvre dans les proportions citées plus haut et de préférence de 2 à 10 % par exemple à 10 % en masse, avec les mélanges de solvants préférés mentionnés plus haut : à savoir perfluorohexyléthylène ou perfluorobutyléthyléne et éther monométhylique du dipropylèneglycol dans des proportions dans le mélange de solvant de préférence de 75 à 25 % et de 25 à 75% par exemple de 25/75 ou 75/25.

De préférence, selon l'invention, la composition est conditionnée dans un récipient pressurisé jetable mis sous pression par un gaz adéquat ; parmi les gaz, l'azote est préféré, car il s'agit d'un gaz non nocif pour l'environnement et ne posant pas de problèmes d'inflammabilité, de toxicité, etc. On pourra également utiliser de l'argon ou bien du F 134a (1,1,1,2-tétrafluoroéthane).

Les compositions selon l'invention trouvent leur application dans l'élimination de l'eau, de toute surface, en particulier transparente, pour laquelle la présence d'eau est indésirable ; il peut s'agir en particulier d'une surface en verre, d'une vitre faisant partie d'un véhicule, d'un bateau, d'un aéronef tel qu'avion, hélicoptère etc. et en particulier le pare-brise d'un véhicule ou d'un aéronef; il peut s'agir aussi de la surface vitrée des phares, d'une vitre de caméra, d'un appareil de guidage, laser ou non, d'un missile guidé, etc. ou tout autre surface vitrée, ou bien une visière d'un casque de pilote automobile, moto, ou de tout autre appareil. L'eau peut avoir une origine quelconque, il peut s'agir d'eau de pluie ou autre, ou d'une eau chargée en minéraux divers, par exemple de l'eau de mer vis à vis de laquelle la composition de l'invention est également efficace, elle pourra ainsi être mis en oeuvre dans les aéronefs, avions et hélicoptères embarqués, les hydravions etc...

L'invention va maintenant être décrite par les exemples suivants donnés à titre illustratif et non limitatif.

## EXEMPLES

### EXEMPLE 1

On a préparé une composition hydrofuge en dissolvant 45g du polysiloxane SF 1706 dans 455g d'un mélange composé de (% en masse) :

- Foralkyl E6 24,87 %
- DPM 74,62 %
- Nitrométhane 0,50 %
- Vert Gallia 0,01 %

Cette composition a été conditionnée de manière classique dans un récipient sous pression placé dans le circuit de pulvérisation sur le pare-brise du cockpit d'un avion AIRBUS-A300-A310.

Elle a été testée dans diverses conditions de vol, de vitesse, atterrissage, décollage, et de pluies ; l'élution de l'eau du pare-brise du cockpit a été chaque fois excellente. Il a été constaté que l'efficacité de la composition était encore accrue par l'utilisation simultanée des essuie-glaces de l'appareil. Toutefois, même sans la mise en oeuvre d'un balayage par les essuie-glaces une excellente visibilité a été obtenue dans toutes les configurations de vol et de pluie.

La surface externe de l'avion a été ensuite examinée, il a été constaté que cette surface était parfaitement propre et nette ; les vitres et les autres surfaces ne comportaient aucun dépôt, aucune coulure, aucune trace, aucune couche dure. Aucun incident ne s'est produit au cours des tests : il n'a été constaté aucun colmatage, aucun bouchage des gicleurs, vannes et canalisations du circuit de pulvérisation.

Un produit de l'art antérieur "RAINBOE" a été testé dans les mêmes conditions. Plusieurs incidents dus au colmatage des gicleurs ont marqué le fonctionnement empêchant la pulvérisation sur les vitres, tandis que des traces et des dépôts durcis, extrêmement difficiles à éliminer ont été constatés sur les glaces du pare-brise et les surfaces voisines.

EXEMPLES 2 à 14

On a préparé une composition hydrofuge en dissolvant 45g de polysiloxane SF 1706 dans 455g d'un composé ou d'un mélange de composés dont la composition (en % en masse) est indiquée, pour chacun de ces exemples, dans le tableau I suivant :

TABLEAU I

| EXEMPLES | 2 | 3 | 4 | 5 | 6 | 7 | 8 | 9 | 10 | 11 | 12 | 13 | 14 |
|---|---|---|---|---|---|---|---|---|---|---|---|---|---|
| $CF_3$-$CH_2$-$CF_2$-$CH_3$ | 25 | | | | | | | | | | | | |
| | | | | | | | | | | | | | |
| $C_4F_9$-CH = $CH_2$ | | 25 | 25 | | | | | | | | 40 | 50 | |
| $C_6F_{13}$-CH = $CH_2$ | | | | 25 | | | | | | 25 | | | |
| $C_6H_{13}H$ | | | | | 25 | | | | | | | | |
| $CF_3$-$(CHF)_2$-$CF_2CF_3$ | | | | | | 25 | | | | | | | |
| $nC_4F_9$-O-$CH_3$ | | | | | | | 25 | | | | | | |
| $nC_6F_{14}$ | | | | | | | | 25 | | | | | |
| $C_5F_{11}NO$ | | | | | | | | | 25 | | | | |
| $CF_3$-$CF_2$-$CH_2$-OH | | | | | | | | | | | | | 100 |
| DPM | 75 | 75 | | 75 | 75 | 75 | 75 | 75 | 75 | | 60 | | |
| Méthoxypropanol | | | 75 | | | | | | | | | | |
| DPnB∗ | | | | | | | | | | 75 | | 50 | |

∗ DPnB signifie dipropylène glycol monobutyl éther (éther monobutylique du dipropylène glycol)

Les compositions obtenues sont conditionnées dans un boitier pour aérosol de 125 ml, avec pour gaz propulseur du HFC 134a dans une proportion de 70g de composition pour 30 g de 134a.

Sur une vitre carrée de 30 cm de côté, disposée horizontalement, on effectue 2 à 3 pulvérisations pour couvrir une surface en forme sensiblement de disque d'environ 10 cm de diamètre. La composition est étalée sur cette surface avec un papier ou chiffon absorbant.

La vitre est ensuite mise en position verticale et reçoit environ 5 ml d'eau pulvérisée au moyen d'un aérosol.

On observe, au bout de quelques secondes, le ruissellement de l'eau appliquée sur la partie de la vitre traitée par l'une quelconque des compositions selon les exemples 2 à 14 .

Sur la partie de la vitre non traitée, en revanche, on observe que l'eau reste sous forme de gouttelettes accrochées au verre. Ces essais montrent l'effet anti-pluie particulièrement avantageux des compositions ainsi préparées selon l'invention.

## Revendications

1. Solution hydrofuge constituée essentiellement par un agent hydrophobe et un solvant compatible avec l'agent actif hydrophobe, **caractérisée en ce que** le solvant comprend au moins un hydrocarbure fluoré, liquide à la température ambiante, choisi parmi les (perfluoroalkyl)-éthylènes contenant 6 à 10 atomes de carbone ; les 1H-hydrogénoperfluoroalcanes contenant 6 à 8 atomes de carbone ; le 1,1,1,2,3,4,4,5,5,5-décafluoropentane ; le n-perfluorohexane ; le 1,1,1,3,3-pentafluorobutane de formule $CF_3$-$CH_2$-$CF_2$-$CH_3$ ; le 3,3,3,2,2-pentafluoro-1-propanol de formule $CF_3$-$CF_2$-$CH_2OH$ ; les éthers d'alkyle et de perfluoroalkyle de formule (I) :

$$R^1_F\text{-O-}R^1 \qquad (I)$$

dans laquelle $R^1_F$ est un radical perfluoroalkyle comprenant de 2 à 6 atomes de carbone et $R^1$ est un radical alkyle comprenant de 1 à 4 atomes de carbone ; les N-perfluoroalkyl-perfluoromorphine éventuellement substituées par un ou plusieurs radicaux perfluoroalkyle de formule (II) :

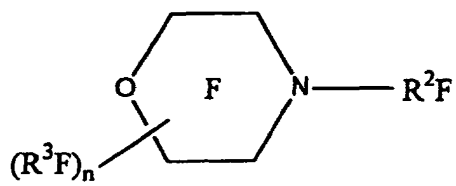

(II)

dans laquelle :

- $R^2_F$ et $R^3_F$, identiques ou différents, représentent un radical aliphatique perfluoré, linéaire ou ramifié, comprenant de 1 à 4 atomes de carbone,
- n est un entier de 0 à 8,
- le symbole F, à l'intérieur du cycle, signifie que le cycle saturé est totalement fluoré, c'est-à-dire que tous les atomes de carbone sont liés à des atomes de fluor ou, éventuellement, à un ou deux radical (aux) $R^3_F$ ; et leurs mélanges ; et **en ce que** l'agent actif hydrophobe est un composé de type organopolysiloxane choisi parmi les composés de formule (IV) :

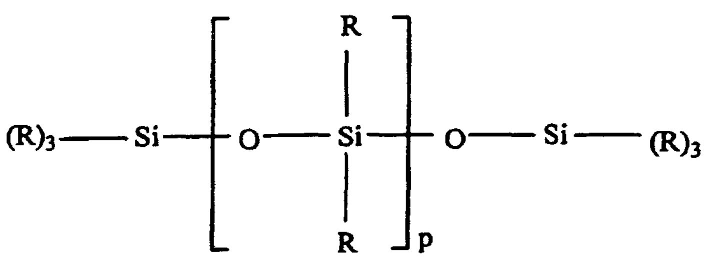

(IV)

où p est un nombre entier de 0 à 150 ; et les symboles R, identiques ou différents, représentent chacun un groupe alkyle ou alcoxy de 1 à 10 atomes de carbone, cycloalkyle de 3 à 10 atomes de carbone, un groupe phényle, un groupe réactif, un halogène ou un hydrogène, à la condition que dans la formule (IV) au moins un des groupes R est un groupe aminé.

2. Solution selon la revendication 1, **caractérisée en ce que** le solvant comprend ledit hydrocarbure fluoré liquide à la température ambiante seul ou en mélange avec un ou plusieurs autres composés choisis parmi les alcanes inférieurs partiellement fluorés, les éthers de glycol, les huiles silicones de faible masse moléculaire, et le méthoxypropanol.

3. Solution selon la revendication 2, **caractérisée en ce que** dans le cas où l'on utilise un mélange de solvants ledit hydrocarbure fluoré liquide à la température ambiante représente de 10 à 90 % en poids du mélange de solvants.

4. Solution selon l'une des revendications 1 à 3, **caractérisée en ce que** lesdits (perfluoroalkyl)-éthylènes répondent à la formule (III) :

$$CF_3\text{-}(CF_2)_n\text{-}CH{=}CH_2 \qquad (III)$$

dans laquelle n est un nombre entier de 3 à 7.

5. Solution selon l'une des revendications 1 à 3, **caractérisée en ce que** ledit 1H-hydrogénoperfluoroalcane est le 1H-hydrogénoperfluorohexane.

6. Solution selon l'une quelconque des revendications 1 à 3, **caractérisée en ce que** ledit éther d'alkyl et de perfluoroalkyle de formule (I) est l'éther de n-perfluorobutyle et de méthyle de formule $nC_4F_9\text{-}O\text{-}CH_3$.

7. Solution selon l'une quelconque des revendications 1 à 3, **caractérisée en ce que** ledit composé de formule (II) est la N-perfluorométhyl-perfluoromorpholine de formule :

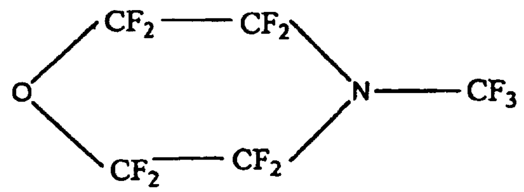

8. Solution selon la revendication 4, **caractérisée en ce que** dans le composé de formule (III), n est 3 ou 5, c'est-à-dire que le composé de formule (III) est le (perfluorobutyl)-éthylène ou le (perfluorohexyl)-éthylène.

9. Solution selon l'une des revendications 1 à 8, **caractérisée en ce qu'**elle comprend en pourcentage massique de 80 à 99 % de solvant et de 1 à 20 % d'agent actif hydrophobe.

10. Solution selon l'une des revendications 1 à 9, **caractérisée en ce qu'**elle comprend en outre au moins une essence de parfum dans une proportion de 0,001 à 1 % en masse de la composition.

11. Solution selon l'une des revendications 2 à 10, **caractérisée en ce que** l'autre composé du mélange de solvants est l'éther monométhylique du dipropylèneglycol (DPM).

12. Solution selon l'une des revendications 9 à 11, **caractérisée en ce qu'**elle comprend de 85 à 99 % de solvant et de 1 à 15 % d'organopolysiloxane.

13. Solution selon la revendication 12, **caractérisée en ce qu'**elle comprend de 90 à 98 % de solvant et de 2 à 10 % d'organopolysiloxane.

14. Solution selon l'une des revendications 8 à 13, **caractérisée en ce que** le solvant est constitué d'un mélange de (perfluorobutyl)-éthylène ou de (perfluorohexyl)-éthylène et d'éther monométhylique du dipropylèneglycol.

15. Solution selon l'une des revendications 1 à 14, **caractérisée en ce que** le composé de formule (IV) est le composé disponible auprès de la Société General Electric sous le dénomination commerciale SF 1706.

16. Solution selon la revendication 15, **caractérisée en ce que** le (perfluorobutyl)-éthylène ou le (perfluorohexyl)-éthylène représente en masse de 25 à 75 % du mélange de solvants, et **en ce que** le composé SF 1706 représente 2 à 10 % en masse de la solution.

17. Solution selon l'une des revendications 10 à 16, **caractérisée en ce que** l'essence de parfum est du d-limonène, du vert Gallia ou de la vanilline.

18. Solution selon l'une des revendications 1 à 17, **caractérisée en ce qu'**elle comprend en outre au moins un stabilisant en une proportion de 0,1 à 5 % par rapport au poids de la solution.

**19.** Procédé pour éliminer l'eau d'une surface quelconque, en particulier d'une surface transparente en appliquant sur ladite surface une composition comprenant un agent hydrophobe et un solvant compatible avec l'agent actif hydrophobe, **caractérisé en ce que** le solvant comprend au moins un hydrocarbure fluoré, liquide à la température ambiante, choisi parmi les (perfluoroalkyl)-éthylènes contenant 6 à 10 atomes de carbone ; les 1H-hydrogénoperfluoroalcanes contenant 6 à 8 atomes de carbone ; le 1,1,1,2,3,4,4,5,5,5-décafluoropentane ; le n-perfluorohexane ; le 1,1,1,3,3-pentafluorobutane de formule $CF_3$-$CH_2$-$CF_2$-$CH_3$ ; le 3,3,3,2,2-pentafluoro-1-propanol de formule $CF_3$-$CF_2$-$CH_2OH$ ; les éthers d'alkyle et de perfluoroalkyle de formule (I) :

$$R^1{}_F\text{-O-}R^1 \qquad \text{(I)}$$

dans laquelle $R^1{}_F$ est un radical perfluoroalkyle comprenant de 2 à 6 atomes de carbone et $R^1$ est un radical alkyle comprenant de 1 à 4 atomes de carbone ; les N-perfluoroalkyl-perfluoromorphine éventuellement substituées par un ou plusieurs radicaux perfluoroalkyle de formule (II) :

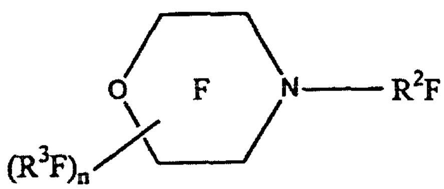

(II)

dans laquelle :

- $R^2{}_F$ et $R^3{}_F$, identiques ou différents, représentent un radical aliphatique perfluoré, linéaire ou ramifié, comprenant de 1 à 4 atomes de carbone,
- n est un entier de 0 à 8,
- le symbole F, à l'intérieur du cycle, signifie que le cycle saturé est totalement fluoré, c'est-à-dire que tous les atomes de carbone sont liés à des atomes de fluor ou, éventuellement, à un ou deux radical (aux) $R^3{}_F$ ; et leurs mélanges ; et **en ce que** l'agent actif hydrophobe est un composé de type organopolysiloxane choisi parmi les composés de formule (IV) :

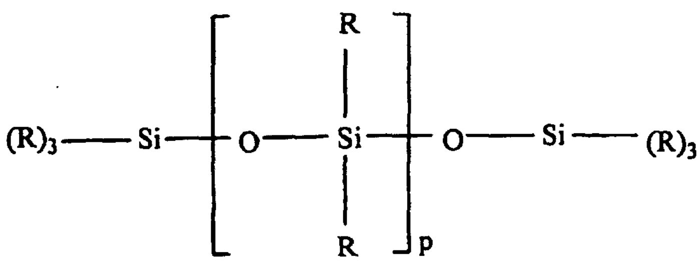

(IV)

où p est un nombre entier de 0 à 150 ; et les symboles R, identiques ou différents, représentent chacun un groupe alkyle ou alcoxy de 1 à 10 atomes de carbone, cycloalkyle de 3 à 10 atomes de carbone, un groupe phényle, un groupe réactif, un halogène ou un hydrogène, à la condition que dans la formule (IV) au moins un des groupes R est un groupe aminé.

**20.** Procédé selon la revendication 19, dans lequel ladite surface transparente est une vitre faisant partie d'un véhicule, d'un bateau, ou d'un aéronef tel qu'un avion ou un hélicoptère.

**21.** Procédé selon la revendication 20, dans lequel ladite vitre est le pare-brise d'un véhicule ou d'un aéronef.

**22.** Procédé selon la revendication 19, dans lequel ladite surface est la surface vitrée de phares, une vitre de caméra,

d'un appareil de guidage, laser ou non, d'un missile guidé, ou toute autre surface vitrée, ou une visière d'un casque de pilote automobile, moto ou de tout autre appareil.

## Patentansprüche

1. Wasserabstoßende Lösung, die im Wesentlichen aus einem hydrophoben Mittel und einem mit dem aktiven hydrophoben Mittel kompatiblen Lösemittel besteht, **dadurch gekennzeichnet, dass** das Lösemittel mindestens einen bei Umgebungstemperatur flüssigen Fluorkohlenwasserstoff umfasst, der aus (Perfluoralkyl)ethylenverbindungen, die 6 bis 10 Kohlenstoffatome enthalten; 1H-Hydrogenperfluoralkanen, die 6 bis 8 Kohlenstoffatome enthalten; 1,1,1,2,3,4,4,-5,5,5-Decafluorpentan; n-Perfluorhexan; 1,1,1,3,3-Pentafluorbutan der Formel $CF_3$-$CH_2$-$CF_2$-$CH_3$; 3,3,3,2,2-Pentafluor-1-propanol der Formel $CF_3$-$CF_2$-$CH_2OH$; Alkyl-perfluoralkyl-ethern der Formel (I):

$$R^1_F\text{-O-}R^1 \qquad (I)$$

worin $R^1_F$ ein Perfluoralkylrest mit 2 bis 6 Kohlenstoffatomen ist und $R^1$ ein Alkylrest mit 1 bis 4 Kohlenstoffatomen ist; N-Perfluoralkyl-perfluormorphinverbindungen, die optional mit einem oder mehreren Perfluoralkylresten substituiert sind, der Formel (II)

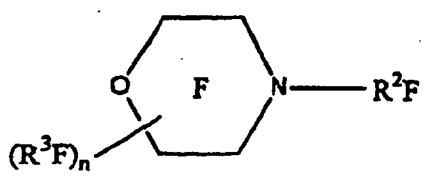

(II)

worin:

$R^2_F$ und $R^3_F$, die gleich oder verschieden sind, für einen linearen oder verzweigten perfluorierten aliphatischen Rest mit 1 bis 4 Kohlenstoffatomen stehen,
n eine ganze Zahl von 0 bis 8 bedeutet,
das Symbol F im Inneren des Rings angibt, dass der gesättigte Ring vollständig fluoriert ist, d. h., dass alle Kohlenstoffatome an Fluoratome oder optional an einen oder zwei Reste $R^3_F$ gebunden sind; und deren Gemischen ausgewählt ist;
und dass das aktive hydrophobe Mittel eine Verbindung des Organopolysiloxan-Typs ist, die aus den Verbindungen der Formel (IV):

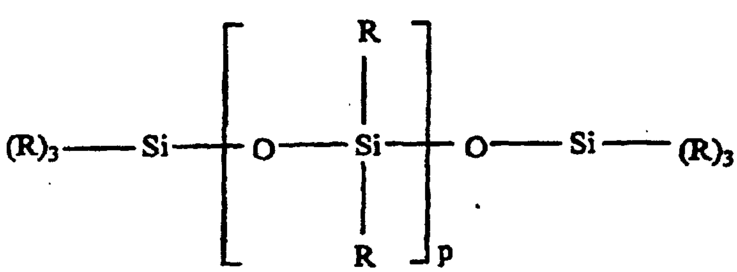

(IV)

worin p eine ganze Zahl von 0 bis 150 ist; und die Symbole R, die gleich oder verschieden sind, jeweils für eine Alkyl- oder Alkoxygruppe mit 1 bis 10 Kohlenstoffatomen, eine Cycloalkylgruppe mit 3 bis 10 Kohlenstoffatomen, eine Phenylgruppe, eine reaktive Gruppe, ein Halogen oder Wasserstoff stehen, unter der Bedingung, dass in der

Formel (IV) mindestens eine der Gruppen R eine aminierte Gruppe ist, ausgewählt ist.

**2.** Lösung nach Anspruch 1, **dadurch gekennzeichnet, dass** das Lösemittel den bei Umgebungstemperatur flüssigen Fluorkohlenwasserstoff allein oder im Gemisch mit einer oder mehreren anderen Verbindungen, die aus partiell fluorierten Niederalkanen, Glykolethern, Silikonölen eines niedrigen Molekulargewichts und Methoxypropanol ausgewählt sind, umfasst.

**3.** Lösung nach Anspruch 2, **dadurch gekennzeichnet, dass** im Falle der Verwendung eines Lösemittelgemischs der bei Umgebungstemperatur flüssige Fluorkohlenwasserstoff 10 bis 90 Gew.-% des Lösemittelgemischs ausmacht.

**4.** Lösung nach einem der Ansprüche 1 bis 3, **dadurch gekennzeichnet, dass** die (Perfluoralkyl)ethylenverbindungen der Formel (III):

$$CF_3\text{-}(CF_2)_n\text{-}CH\text{=}CH_2 \qquad \text{(III)}$$

worin n eine ganze Zahl von 3 bis 7 ist, entsprechen.

**5.** Lösung nach einem der Ansprüche 1 bis 3, **dadurch gekennzeichnet, dass** das 1H-Hydrogenperfluoralkan 1H-Hydrogenperfluorhexan ist.

**6.** Lösung nach einem der Ansprüche 1 bis 3, **dadurch gekennzeichnet, dass** der Alkyl-perfluoralkyl-ether der Formel (I) der n-Perfluorbutyl-methyl-ether der Formel $nC_4F_9\text{-}O\text{-}CH_3$ ist.

**7.** Lösung nach einem der Ansprüche 1 bis 3, **dadurch gekennzeichnet, dass** die Verbindung der Formel (II) N-Perfluormethyl-perfluormorpholin der im Folgenden angegebenen Formel ist:

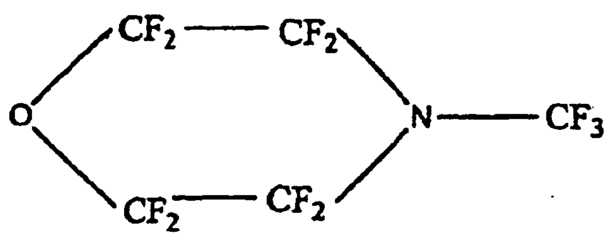

**8.** Lösung nach Anspruch 4, **dadurch gekennzeichnet, dass** in der Verbindung der Formel (III) n 3 oder 5 ist, d. h. die Verbindung der Formel (III) (Perfluorbutyl)ethylen oder (Perfluorhexyl)ethylen ist.

**9.** Lösung nach einem der Ansprüche 1 bis 8, **dadurch gekennzeichnet, dass** sie in Masse-% 80 bis 99 % Lösemittel und 1 bis 20 % an aktivem hydrophobem Mittel umfasst.

**10.** Lösung nach einem der Ansprüche 1 bis 9, **dadurch gekennzeichnet, dass** sie ferner mindestens einen Duftstoff in einem Anteil von 0,001 bis 1 Masse-% der Zusammensetzung umfasst.

**11.** Lösung nach einem der Ansprüche 2 bis 10, **dadurch gekennzeichnet, dass** die weitere Verbindung des Lösemittelgemischs Dipropylenglykolmonomethylether (DPM) ist.

**12.** Lösung nach einem der Ansprüche 9 bis 11, **dadurch gekennzeichnet, dass** sie 85 bis 99 % Lösemittel und 1 bis 15 % Organopolysiloxan umfasst.

**13.** Lösung nach Anspruch 12, **dadurch gekennzeichnet, dass** sie 90 bis 98 % Lösemittel und 2 bis 10 % Organopolysiloxan umfasst.

**14.** Lösung nach einem der Ansprüche 8 bis 13, **dadurch gekennzeichnet, dass** das Lösemittel aus einem Gemisch

von (Perfluorbutyl)ethylen oder (Perfluorhexyl)ethylen und Dipropylenglykolmonomethylether besteht.

**15.** Lösung nach einem der Ansprüche 1 bis 14, **dadurch gekennzeichnet, dass** die Verbindung der Formel (IV) die bei der Firma General Electric unter der Handelsbezeichnung SF 1706 erhältliche Verbindung ist.

**16.** Lösung nach Anspruch 15, **dadurch gekennzeichnet, dass** (Perfluorbutyl)ethylen oder (Perfluorhexyl)ethylen 25 bis 75 Masse-% des Lösemittelgemischs ausmachen und die Verbindung SF 1706 2 bis 10 Masse-% der Lösung ausmacht.

**17.** Lösung nach einem der Ansprüche 10 bis 16, **dadurch gekennzeichnet, dass** der Duftstoff d-Limonen, Vert Gallia oder Vanillin ist.

**18.** Lösung nach einem der Ansprüche 1 bis 17, **dadurch gekennzeichnet, dass** sie ferner mindestens ein Stabilisierungsmittel in einem Anteil von 0,1 bis 5 %, bezogen auf das Gewicht der Lösung, umfasst.

**19.** Verfahren zum Entfernen von Wasser von einer beliebigen Oberfläche, insbesondere einer transparenten Oberfläche durch Applizieren einer Zusammensetzung, die ein hydrophobes Mittel und ein mit dem aktiven hydrophoben Mittel kompatibles Lösemittel umfasst, auf die Oberfläche, **dadurch gekennzeichnet, dass** das Lösemittel mindestens einen bei Umgebungstemperatur flüssigen Fluorkohlenwasserstoff umfasst, der aus (Perfluoralkyl)ethylenverbindungen, die 6 bis 10 Kohlenstoffatome enthalten; 1H-Hydrogenperfluoralkanen, die 6 bis 8 Kohlenstoffatome enthalten; 1,1,1,2,3,4,4,5,5,5-Decafluorpentan; n-Perfluorhexan; 1,1,1,3,3-Pentafluorbutan der Formel $CF_3$-$CH_2$-$CF_2$-$CH_3$; 3,3,3,2,2-Pentafluor-1-propanol der Formel $CF_3$-$CF_2$-$CH_2OH$; Alkyl-perfluoralkyl-ethern der Formel (I):

$$R^1{}_F\text{-O-}R^1 \qquad \text{(I)}$$

worin $R^1{}_F$ ein Perfluoralkylrest mit 2 bis 6 Kohlenstoffatomen ist und $R^1$ ein Alkylrest mit 1 bis 4 Kohlenstoffatomen ist; N-Perfluoralkyl-perfluormorphinverbindungen, die optional mit einem oder mehreren Perfluoralkylresten substituiert sind, der Formel (II)

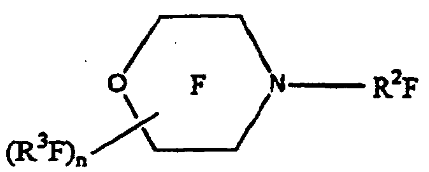

(II)

worin:

$R^2{}_F$ und $R^3{}_F$, die gleich oder verschieden sind, für einen linearen oder verzweigten perfluorierten aliphatischen Rest mit 1 bis 4 Kohlenstoffatomen stehen,
n eine ganze Zahl von 0 bis 8 bedeutet,
das Symbol F im Inneren des Rings angibt, dass der gesättigte Ring vollständig fluoriert ist, d. h., dass alle Kohlenstoffatome an Fluoratome oder optional an einen oder zwei Reste $R^3{}_F$ gebunden sind; und deren Gemischen ausgewählt ist;
und dass das aktive hydrophobe Mittel eine Verbindung des Organopolysiloxan-Typs ist, die aus den Verbindungen der Formel (IV):

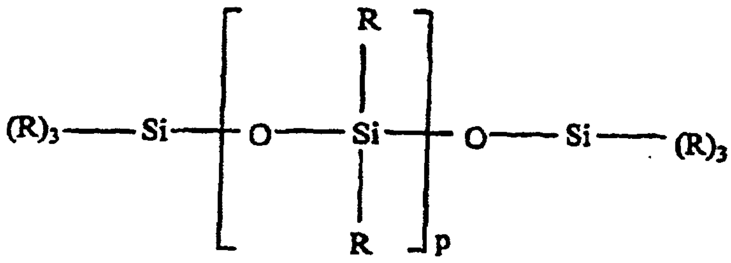

(IV)

worin p eine ganze Zahl von 0 bis 150 ist; und die Symbole R, die gleich oder verschieden sind, jeweils für eine Alkyl- oder Alkoxygruppe mit 1 bis 10 Kohlenstoffatomen, eine Cycloalkylgruppe mit 3 bis 10 Kohlenstoffatomen, eine Phenylgruppe, eine reaktive Gruppe, ein Halogen oder Wasserstoff stehen, unter der Bedingung, dass in der Formel (IV) mindestens eine der Gruppen R eine aminierte Gruppe ist, ausgewählt ist.

**20.** Verfahren nach Anspruch 19, wobei die transparente Oberfläche eine Fensterscheibe, die Teil eines Kraftfahrzeugs, eines Boots oder eines Luftfahrzeugs, wie eines Flugzeugs oder Hubschraubers, bildet, ist.

**21.** Verfahren nach Anspruch 20, wobei die Fensterscheibe die Windschutzscheibe eines Kraftfahrzeugs oder Luftfahrzeugs ist.

**22.** Verfahren nach Anspruch 19, wobei die Oberfläche die Glasoberfläche von Scheinwerfern, eine Glasscheibe einer Kamera, einer Leiteinrichtung, mit Laser oder ohne, eines Lenkflugkörpers oder jede andere Glasoberfläche oder ein Visier eines Helms für den Piloten eines Kraftfahrzeugs, Motorrads oder jeder anderen Vorrichtung ist.

## Claims

**1.** Water repellent solution comprising a hydrophobic agent and a solvent compatible with the hydrophobic active agent, **characterized in that** the solvent comprises at least one fluorinated hydrocarbons, liquid at ambient temperature, chosen from the (perfluoroalkyl)-ethylenes containing 6 to 10 carbon atoms; IH-hydrogenoperfluoroalkanes containing 6 to 8 carbon atoms; 1,1,1,2,3,4,4,5,5,5-decafluoropentane; n-perfluorohexane; 1,1,1,3,3-pentafluorobutane with formula $CF_3$-$CH_2$-$CF_2$-$CH_3$; 3,3,3,2,2-pentafluoro-1-propanol with the formula $CF_3$-$CF_2$-$CH_2OH$; alkyl and perfluoroalkyl ethers of formula (I):

$$R^1{}_F - 0 - R^1 \qquad (I)$$

in which $R^1{}_F$ is a perfluoroalkyl radical comprising from 2 to 6 carbon atoms and $R^1$ is an alkyl radical comprising from 1 to 4 carbon atoms; the N-perfluoroalkyl-perfluoromopholines possibly substituted by one or more perfluoroalkyl radicals of formula (II)

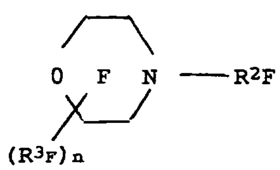

(II)

in which:

- $R^1{}_F$ and $R^3{}_F$, identical or different, represent a perfluorinated aliphatic radical, linear or branched, comprising from 1 to 4 carbon atoms,
- n is a whole number from 0 to 8,

- the symbol F, within the cycle, means that the saturated cycle is fully fluorinated, that is to say that all the carbon atoms are bound to fluorine atoms or, possibly, to one or two $R^3{}_F$ radicals; and their mixtures; and **in that** the hydrophobic active agent is a compound of the organopolysiloxane type, chosen from among compounds of formula (IV):

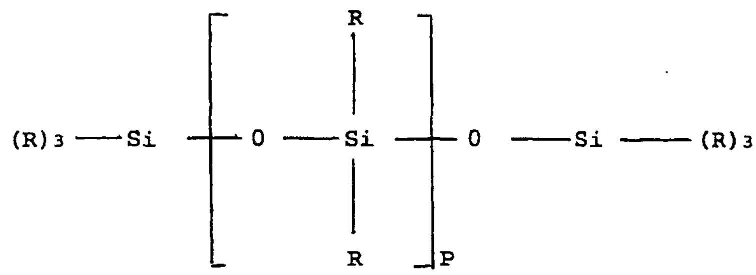

(IV)

where p is a whole number from 0 to 150 and the symbols R, identical or different, each represent an alkyl or alkoxy group with 1 to 10 carbon atoms, cycloalkyl with 3 to 10 carbon atoms, a phenyl group, a reactive group, a halogen or a hydrogen, provided that in formula (IV) at least one of the groups R is an amino group.

**2.** Solution in accordance with claim 1, **characterized in that** the solvent comprises said fluorinated hydrocarbon, liquid at ambient temperature, either alone or in a mixture with one or more compounds chosen from among the partly fluorinated lower alkanes, glycol ethers, silicone oils of low molecular weight, and methoxypropanol.

**3.** Solution in accordance with claim 2, **characterized in that** in the event that a mixture of solvents is used, said fluorinated hydrocarbon, liquid at ambient temperature, represents from 10 to 90 wt.% of the mixture of solvents.

**4.** Solution in accordance with one of the claims 1 to 3, **characterized in that** said (perfluoroalkyl)-ethylenes comply with formula (III)

$$CF_3\text{-}(CF_2)_n\text{ - }CH = CH_2 \qquad \text{(III)}$$

in which n is a whole number from 3 to 7.

**5.** Solution in accordance with one of the claims 1 to 3, **characterized in that** said IH-hydrogenoperfluoroalkane is IH-hydrogenoperfluorohexane.

**6.** Solution in accordance with any one of the claims 1 to 3, **characterized in that** said alkyl and perfluoroalkyl ether of formula (I) is the ether of n-perfluorobutyl and methyl with the formula $nC_4F_9\text{-}O\text{-}CH_3$.

**7.** Solution in accordance with any one of the claims 1 to 3, **characterized in that** said compound of formula (II) is N-perfluoromethyl-perfluoromorpholine with the formula:

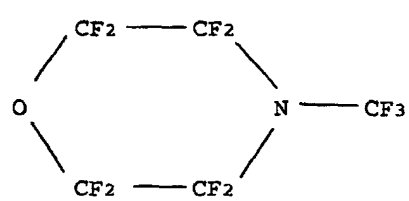

**8.** Solution in accordance with claim 4, **characterized in that** in the compound of formula (III) n is 3 or 5, that is to say that the compound of formula (III) is (perfluorobutyl)-ethylene or (perfluorohexyl)-ethylene.

**9.** Solution in accordance with one of the claims 1 to 8, **characterized in that** it comprises a weight percentage of 80 to 99% of solvent and of 1 to 20% of hydrophobic active agent.

**10.** Solution in accordance with one of the claims 1 to 9, **characterized in that** it also comprises at least one essence of perfume in the proportion of 0.001 to 1 wt.% in relation to the solution.

**11.** Solution in accordance with one of the claims 2 to 10, **characterized in that** the other compound of the mixture of solvents is dipropylene glycol monomethyl ether (DPM).

**12.** Solution in accordance with one of the claims 9 to 11, **characterized in that** it comprises from 85 to 99% of solvent and from 1 to 15% of organopolysiloxane.

**13.** Solution in accordance with claim 12, **characterized in that** it comprises from 90 to 98% of solvent and from 2 to 10% of organopolysiloxane.

**14.** Solution in accordance with one of the claims 8 to 14, **characterized in that** the solvent is made up of a mixture of (perfluorobutyl)-ethylene or (perfluorohexyl)-ethylene and of dipropylene glycol monomethyl ether.

**15.** Solution in accordance with one of the claims 1 to 14, **characterized in that** the compound of formula (IV) is the compound available from General Electric under the trade name SF 1706.

**16.** Solution in accordance with claim 15, **characterized in that** the (perfluorobutyl)-ethylene or (perfluorohexyl)-ethylene represents in weight from 25 to 75% of the mixture of solvents, and **in that** the SF 1706 compound represents from 2 to 10 wt.% of the solution.

**17.** Solution in accordance with one of the claims 10 to 16, **characterized in that** the essence of perfume is d-limonene, Gallia green or vanillin.

**18.** Solution in accordance with one of the claims 1 to 17, **characterized in that** it also comprises at least one stabilizer in the proportion of 0.1 to 5% related to the weight of the solution.

**19.** Process for eliminating water from a random surface, particularly a transparent surface, by applying to said surface a composition comprising a hydrophobic agent and a solvent compatible with the hydrophobic active agent, **characterized in that** the solvent comprises at least one fluorinated hydrocarbon, which is liquid at ambient temperature and chosen from (perfluoroalkyl)-ethylenes containing 6 to 10 carbon atoms, 1H-hydrogenoperfluoroalkanes containing 6 to 8 carbon atoms, 1,1,1,2,3,4,4,5,5,5-decafluoropentane; n-perfluorohexane; 1,1,1,3,3-pentafluorobutane of formula $CF_3\text{-}CH_2\text{-}CF_2\text{-}CH_3$; 3,3,3,2,2-pentafluoro-1-propanol of formula $CF_3\text{-}CF_2\text{-}CH_2OH$; alkyl and perfluoroalkyl ethers of formula (I):

$$R^1{}_F\text{-O-}R^1 \qquad (I)$$

in which $R^1{}_F$ is a perfluoroalkyl radical comprising 2 to 6 carbon atoms and $R^1$ is an alkyl radical comprising 1 to 4 carbon atoms, N-perfluoroalkyl-perfluoromorphine, optionally substituted by one or more perfluoroalkyl radicals of formula (II):

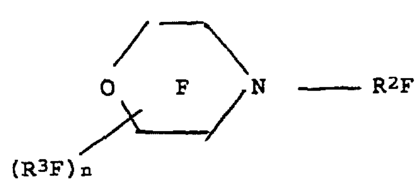

(II)

in which:

- $R^2{}_F$ and $R^3{}_F$, identical or different, represent a straight or branched chain, perfluoro, aliphatic radical comprising 1 to 4 carbon atoms,

- n is a whole number from 0 to 8,
- the symbol F, within the cycle, means that the saturated cycle is completely fluorinated, i.e. all the carbon atoms are linked with fluorine atoms or, optionally, with one or two radicals $R^3_F$, and their mixtures; and **in that** the hydrophobic active agent is an organopolysiloxane-type compound chosen from among the compounds of formula (IV):

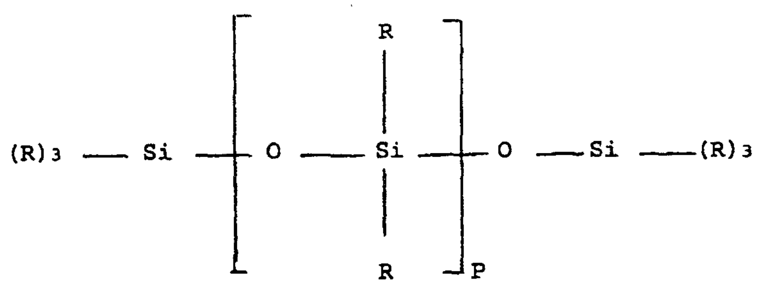

(IV)

in which p is a whole number from 0 to 150 and the symbols R, identical or different, each represent an alkoxy or alkyl group with 1 to 10 carbon atoms, cycloalkyl with 3 to 10 carbon atoms, a phenyl group, a reactive group, a halogen or a hydrogen, provided that in formula (IV) at least one of the groups R is an amino group.

**20.** Process according to claim 19, wherein said transparent surface is a window forming part of a vehicle, boat, aircraft such as an aeroplane or a helicopter.

**21.** Process according to claim 20, wherein said window is the windscreen of a vehicle or an aircraft.

**22.** Process according to claim 19, wherein said surface is the glazed surface of headlights, camera window, a guide apparatus, which may or may not be of the laser type, a guided missile, or any other glazed surface or the helmet visor of a car or motorcycle racing driver or any other apparatus.